# EUROPÄISCHE PATENTANMELDUNG

(11) **EP 1 121 870 A2**
(43) Veröffentlichungstag der Anmeldung: **08.08.2001**
(21) Anmeldenummer: 01101228.3
(22) Anmeldetag: 19.01.2001
(51) Int. Cl.: A24C 5/60

(54) **Verfahren und Vorrichtung zum Perforieren von stabförmigen Artikeln**

(30) Priorität: 04.02.2000 DE 10004908
(71) Anmelder: Hauni Maschinenbau AG, 21033 Hamburg (DE)
(72) Erfinder: Dombek, Manfred, 21521 Dassendorf (DE)
(74) Vertreter: Eisenführ, Speiser & Partner

(57) **Zusammenfassung**

Die Erfindung betrifft ein Verfahren zum Perforieren von stabförmigen Artikeln der tabakverarbeitenden Industrie, insbesondere Doppelfilterzigaretten. Das erfindungsgemäße Verfahren zeichnet sich dadurch aus, daß n rtikel gleichzeitig perforiert werden, wobei n ≥ 2 und eine natürliche Zahl ist. Weiterhin betrifft die Erfindung ein Perforationsmittel zum Perforieren von stabförmigen Artikeln der tabakverarbeitenden Industrie. Das erfindungsgemäße Perforationsmittel zeichnet sich dadurch aus, daß n Laserstrahlen zum gleichzeitigen Perforieren von n Artikeln vorgesehen sind, wobei n ≥ 2 und eine natürliche Zahl ist, und wobei n - x Umlenkspiegeln, wobei x ≤ n und eine natürliche Zahl ist, vorgesehen sind, und wobei die n Laserstrahlen auf den n - x Umlenkspiegeln jeweils paarweise einen Winkel zwischen sich einschließen, der dem Abstand zweier Artikel angepaßt ist.

## Beschreibung

Die Erfindung betrifft ein Verfahren zum Perforieren von stabförmigen Artikeln der tabakverarbeitenden Industrie, insbesondere von Filterzigaretten, und ein Perforationsmittel zum Ausführen des erfindungsgemäßen Verfahrens.

Für das Herstellen von Filterzigaretten werden diese häufig im Bereich des Filters mit einer sogenannten Ventilationszone (Zone gewollter Luftdurchlässigkeit) versehen, durch welche beim Abrauchen der Zigaretten kühle Umgebungsluft angesaugt werden kann, die die Anteile von Nikotin und Kondensat im Rauch beeinflussen.

Ein Verfahren zum Herstellen einer solchen Ventilationszone besteht darin, die Zigaretten in eine Rotationsbewegung um ihre Längsachse zu versetzen und mit einem gepulsten Laserstrahl eine oder mehrere Reihen kleiner Löcher in das Belagpapier und den äußeren Bereich der Filter einzubringen. Ein Beispiel zeigt die DE 27 51 522 C2 (US 4,281,670).

Aufgabe der Erfindung ist es, ein Verfahren und eine Vorrichtung der eingangs genannten Art zur Verfügung zu stellen, bei der der einzelne Artikel weniger beansprucht wird.

Diese Aufgabe wird erfindungsgemäß durch ein Verfahren gemäß Anspruch 1 und ein Perforationsmittel gemäß Anspruch 7 gelöst.

Die Vorteile der Erfindung liegen insbesondere darin, daß aufgrund der gleichzeitigen Perforation mehrerer Artikel diese mit geringerem Abstand zueinander und bei vorgegebenem Durchsatz mit geringerer Geschwindigkeit gefördert und dabei auch entsprechend langsamer um ihre eigenen Achsen gedreht werden können. Insgesamt kommt es daher zu einer schonenderen Behandlung der Artikel.

Als besonders vorteilhaft hat es sich erwiesen, wenn zum Perforieren von beispielsweise zwei Artikeln zwei Laserstrahlen verwendet werden. Dabei werden diese Laserstrahlen in einem Winkel zueinander auf nur einen Umlenkspiegel gerichtet. Bei diesem Verfahren kann daher mit nur einem Umlenkspiegel eine gleichzeitige Perforation von zwei benachbarten Artikeln vorgenommen werden. Der Winkel, den die Laserstrahlen zwischen sich einschließen, ist dabei dem Abstand der benachbarten Artikel angepaßt. Denkbar ist auch das Weglassen des Umlenkspiegels, so daß die Laserstrahlen direkt auf die Artikel einwirken. Zusätzlich kann auch eine fokuskorrigierte Optik zwischengeschaltet sein, um die Laserstrahlen auch trotz ihres Winkelabstandes fokussiert auf die Artikel auftreffen zu lassen.

Besonders bevorzugt ist es, wenn der Umlenkspiegel als Schwenkspiegel ausgebildet ist. Mit Hilfe eines derartigen Schwenkspiegels können dann die auf den Spiegel treffenden Laserstrahlen sich bewegenden Artikeln nachgeführt werden.

Bei einer weiteren bevorzugten Ausführungsform werden nicht nur benachbarte Artikel gleichzeitig perforiert, sondern auf dem jeweiligen Artikel werden wiederum benachbarte Stellen gleichzeitig perforiert. Dies bietet sich insbesondere in der tabakverarbeitenden Industrie bei dem eingangs erwähnten Einbringen von Ventilationszonen in die Zigaretten an. Dabei werden beispielsweise zwei parallele Reihen von Löchern in dem Belagpapier erzeugt. Handelt es sich um Doppelfilterzigaretten, so können in beiden Hälften der Doppelfilterzigarette jeweils zwei parallele Reihen eingebracht werden. Als besonders vorteilhaft zum Einbringen dieser parallelen Reihen hat es sich erwiesen, eine Reihe von halbdurchlässigen Spiegeln zur Strahlteilung der Laserstrahlen zu verwenden. Dabei läßt man den oder die Laserstrahlen zunächst durch die hintereinander fluchtend angeordneten halbdurchlässigen Spiegel fallen, wobei sie am Schluß durch einen vollreflektierenden Spiegel reflektiert werden. Von jedem der halbdurchlässigen Spiegel und auch von dem vollreflektierenden Spiegel werden die Laserstrahlen entweder direkt oder über Umlenkspiegel der oben beschriebenen Art auf die zu perforierenden Artikel gelenkt. Auch hier können fokuskorrigierte Optiken den Umlenkspiegeln nachgeschaltet sein. Die Anzahl der so für die Perforation der Artikel zur Verfügung stehenden Laserstrahlen ergibt sich dabei nach der Formel m = p (q + 1). Dabei ist m die Anzahl der erzeugten Laserstrahlen, p die Anzahl der einfallenden Laserstrahlen, während q die Anzahl der halbdurchlässigen Spiegel ist, die auch gleich O sein kann. Werden nun beispielsweise zwei parallel einfallende Laserstrahlen durch einen halbdurchlässigen Spiegel und anschließend auf den vollreflektierenden Spiegel gerichtet, so ergeben sich schließlich zwei Paare von parallelen Laserstrahlen also insgesamt vier Laserstrahlen für die Perforation der Artikel.

Bei einer weiterer bevorzugten Ausführungsform ist das erfindungsgemäße Verfahren zum Perforieren bzw. das erfindungsgemäße Perforationsmittel zum Ausführen dieses Perforationsverfahrens in eine Vorrichtung zum Herstellen von stabförmigen Artikeln der tabakverarbeitenden Industrie integriert, welche Vorrichtung einen Rollkanal zum Umwickeln derArtikelblättchen aufweist. Dabei ist es besonders bevorzugt, wenn die Perforationszone, in der die Perforation der Artikel ausgeführt wird, der Umwicklungszone, in der die Umwicklung der Artikel mit Blättchen ausgeführt, direkt folgt, oder beide Zonen sich in angrenzenden Randabschnitten sogar teilweise überschneiden. Somit können bei dieser Ausführungsform die Artikel ohne Unterbrechung in dauernder Rollbewegung in beiden Zonen verarbeitet werden.

Eine andere vorteilhafte Ausführungsform zeichnet sich dadurch aus, daß beide Zonen in einem Rollkanal ausgebildet sind, welcher Rollkanal aus einer eine Umfangsoberfläche aufweisenden Rolltrommel und einem der Umfangsoberfläche gegenüberliegenden, eine Gegenrollfläche aufweisenden Rollklotz gebildet ist. Dabei ist dieser Rollklotz bevorzugt mit einer Öffnung versehen, durch welchen die als Perforationsmittel dienenden Laserstrahlen auf die im Rollkanal befindlichen Artikel einwirken können.

Weitere vorteilhaften Ausführungsformen der Erfindung sind in den Unteransprüchen angegeben.

Im folgenden wird eine Ausführungsform der Erfindung mit Bezug auf die Zeichnung beschrieben. Es zeigen:
- Fig. 1: einen schematischen Querschnitt durch eine Ausführungsform einer erfindungsgemäßen Vorrichtung zum Herstellen von perforierten Doppelfilterzigaretten;
- Fig. 2: eine perforierte Doppelfilterzigarette; und
- Fig. 3: eine schematische Darstellung des Strahlenganges von zur Perforation verwendeten Laserstrahlen bei der Ausführungsform gemäß Fig. 1.

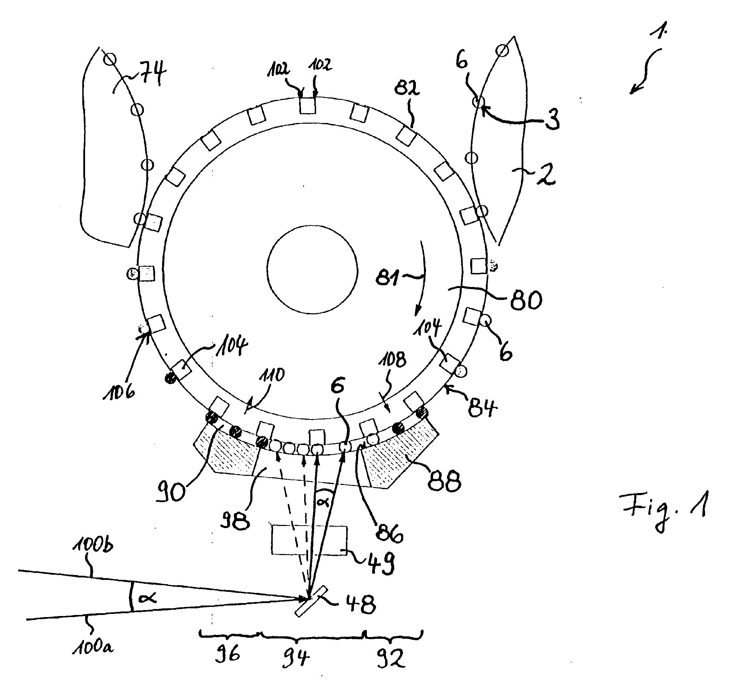

Fig. 1 zeigt einen schematischen Querschnitt einer erfindungsgemäßen Vorrichtung 1. Die Vorrichtung 1 weist eine Zufördertrommel 2 auf. Die Zufördertrommel 2 trägt in Mulden 3 Doppelfilterzigaretten 6.

Von der Zufördertrommel 2 werden die Doppelfilterzigaretten 6 an eine Rolltrommel 80 übergeben. Die Rolltrommel 80 rotiert in der durch den Pfeil 81 angegebenen Richtung. Die Rolltrommel 80 weist relativ flache Mulden 82 in ihrer Umfangsoberfläche 84 auf. Konzentrisch zu der als Rollfläche dienenden Umfangsoberfläche 84 der Rolltrommel 80 ist eine Gegenrollfläche 86 eines Rollklotzes 88 angeordnet. Die Umfangsoberfläche 84 und die Gegenrollfläche 86 bilden einen Rollkanal 90, der eine Umwicklungszone 92 und eine Perforationszone 94 und eine Transportzone 96 enthält. Die Perforationszone 94 wird durch eine Perforationsöffnung 98 in dem Rollklotz 88 gebildet. Durch die Perforationsöffnung 98 können Laserstrahlen 100a und 100b über einen Schwenkspiegel 48 und eine fokuskorrigierte Linse 49 auf die Doppelfilterzigaretten 6 in dem Rollkanal 90 einwirken und auf diese Weise Öffnungen in der Umfangsoberfläche der Doppelfilterzigaretten 6 perforieren.

Die beiden Laserstrahlen 100a und 100b schließen zwischen sich einen Winkel α ein. Dieser Winkel α ist so gewählt, daß die Laserstrahlen 100a und 100b benachbarte Doppelfilterzigaretten 6, die sich in der Perforationszone 94 befinden, gleichzeitig perforieren können. Dadurch steht für die Perforation die doppelte Zeit zur Verfügung verglichen mit der Perforation mit nur einem Laserstrahl, was eine entsprechend langsamere und somit schonendere Rollung der einzelnen Doppelfilterzigarette 6 zur Folge hat.

Die Mulden 82 in der Umfangsoberfläche 84 der Rolltrommel 80 weisen radial ausfahrbare Hebestege 104 auf, die nach dem Ausfahren eine vollständig ebene Umfangsoberfläche 84 der Rolltrommel 80 schaffen. Auf diese Weise läßt sich verhindern, daß die Doppelfilterzigaretten 6 in dem Rollkanal 90 über Kanten 102 der Mulden 82 hinwegrollen müssen. Das Ausfahren der Hebestege 104 ist durch den Pfeil 108 symbolisiert. Durch den Pfeil 110 ist das radiale Einfahren der Hebestege 104 symbolisiert, um die Mulden 82 erneut in der Umfangsoberfläche 84 entstehen zu lassen, um darin die schließlich mit nicht dargestellten Blättchen umrollten und anschließend in der Perforationszone 94 perforierten und schließlich in der Transportzone 96 weiterbeförderten Doppelfilterzigaretten 6 wiederum auf der Rolltrommel 80 abtransportieren zu können. Eine Abfördertrommel 74 übernimmt schließlich die so hergestellten Doppelfilterzigaretten 6 aus den Mulden 82 der Rolltrommel 80.

Fig. 2 zeigt eine Doppelfilterzigarette 6 in einem Zustand nach dem Verlassen der Perforationszone 94. Die Abbildung zeigt die in die Umfangsoberfläche 112 der Doppelfilterzigarette 6 einperforierten Öffnungen 114. In der in der Fig. 2 dargestellten Ausführungsform sind jeweils zwei dicht nebeneinander parallel entlang des Umfangs verlaufende Reihen von Öffnungen 114 dargestellt.

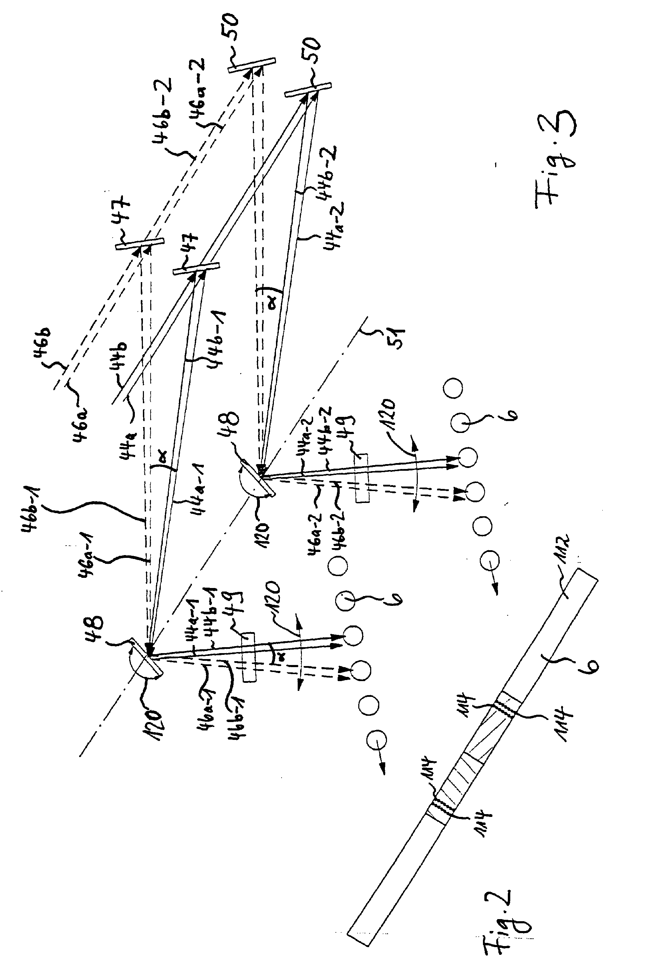

Fig. 3 zeigt das Einbringen von zwei dicht nebeneinander parallel verlaufenden Reihen von Perforationsöffnungen 114 gemäß Fig. 2. Dabei werden zwei nahezu parallel verlaufende Laserstrahlen 44a und 44b zunächst auf einen halbdurchlässigen Spiegel 47 gerichtet. Von diesem halbdurchlässigen Spiegel wird ein Teil der Laserstrahlen 44a und 44b als Teilstrahlen 44a-1 und 44b-2 auf einen Schwenkspiegel 48 reflektiert. Von dem Schwenkspiegel 48 werden die beiden Teilstrahlen 44a-1 und 44b-2 über eine fokuskorrigierte Linse 49 dann auf die Doppelfilterzigarette 6 gerichtet.

Die durch den halbdurchlässigen Spiegel 47 hindurchgetretenen Teilstrahlen 44a-2 und 44b-2 treffen auf einen vollreflektierenden Spiegel 50. Von dem vollreflektierenden Spiegel 50 werden die Teilstrahlen 44a-2 und 44b-2 ebenfalls auf einen Schwenkspiegel 48 und von dort auf eine fokuskorrigierte Linse 49 auf eine Doppelfilterzigarette 6 gerichtet.

Die beiden Schwenkspiegel 48 sind auf einer gemeinsamen Schwenkachse 51 schwenkbar angeordnet. Diese Schwenkachse 51 ist in der Fig. 1 senkrecht zur Bildebene angeordnet, so daß in der Fig. 1 nur einer der Schwenkspiegel 48 zu erkennen ist. Mit Hilfe des halbdurchlässigen Spiegels 47 liegen somit insgesamt zwei Paare von parallelen Laserstrahlen 44a-1 und 44b-1 bzw. 44a-2 und 44b-2 vor, die zur Perforation der beiden Paare parallel verlaufender Perforationsreihen 114 in der Umfangsoberfläche 112 der Doppelfilterzigarette 6 dienen können. Dabei werden diese Paare von Laserstrahlen 44a-1 und 44b-1 bzw. 44a-2 und 44b-2 mit Hilfe des Schwenkspiegels 48 gemäß den Pfeilen 120 den sich bewegenden Doppelfilterzigaretten 6 nachgeführt.

Um gleichzeitig zwei Doppelfilterzigaretten 6 perforieren zu können, sind in einem Winkel zu den zuvor beschriebenen Laserstrahlen 44a und 44b weitere zwei im wesentlichen parallel verlaufende Laserstrahlen 46a und 46b vorgesehen. Diese Laserstrahlen 46a und 46b schließen mit den Laserstrahlen 44a und 44b einen Winkel a ein. Der Winkel a ist dabei so gewählt, daß er dem Abstand der Doppelfilterzigaretten 6 entspricht, so daß eine gleichzeitige Perforation von zwei benachbarten Doppelfilterzigaretten 6 möglich ist. Auch das zweite Paar von Laserstrahlen 46a und 46b wird durch einen weiteren halbdurchlässigen Spiegel 47 und über einen vollreflektierenden Spiegel 50 auf einen weiteren Schwenkspiegel 48 geleitet, um somit zwei weitere Paare von parallel verlaufenden Laserstrahlen 46a-1 und 46b-1 bzw. 46a-2 und 46b-2 zu erzeugen.

## Patentansprüche

1. Verfahren zum Perforieren von stabförmigen Artikeln (6) der tabakverarbeitenden Industrie,
dadurch gekennzeichnet, daß n Artikel (6) gleichzeitig perforiert werden, wobei n ≥ 2 und eine natürliche Zahl ist.

2. Verfahren nach Anspruch 1,
wobei n, vorzugsweise 2, Laserstrahlen (100a, 100b) zum Perforieren verwendet werden,
welche Laserstrahlen (100a, 100b) jeweils paarweise derart in einem Winkel (α) zueinander auf n-x Umlenkspiegel (48) gerichtet werden, daß sie jeweils paarweise auf die Artikel (6) treffen, wobei x < n und eine natürliche Zahl ist.

3. Verfahren nach Anspruch 2,
zum Perforieren von Artikeln (6), die sich in Bewegung befinden,
wobei die n, vorzugsweise 2, Laserstrahlen (100a, 100b) durch Verschwenken der n-x, vorzugsweise einem, als Schwenkspiegel (48) ausgebildeten Umlenkspiegel den Artikeln (6) nachgeführt werden.

4. Verfahren nach einem der vorstehenden Ansprüche,
wobei jeder der n Artikel (6) wiederum gleichzeitig an m Stellen (114) perforiert wird, wobei m ≥ 2 und eine natürliche Zahl ist.

5. Verfahren nach Anspruch 4,
wobei die m Stellen (114) perforiert werden, indem m Laserstrahlen (44a-1, 44b-1, 44a-2, 44b-2; 46a-1, 46b-1, 46a-2, 46b-2) im wesentlichen parallel zueinander auf den jeweiligen Artikel (6) gerichtet werden.

6. Verfahren nach Anspruch 5,
wobei die m Laserstrahlen (44a-1, 44b-1, 44a-2, 44b-2; 46a-1, 46b-1, 46a-2, 46b-2) erzeugt werden, indem p, vorzugsweise 2, Laserstrahlen (44a, 44b; 46a, 46b) zunächst durch q, vorzugsweise einen, halbdurchlässigen Spiegel (47) und anschließend auf einen vollreflektierenden Spiegel (50) geleitet werden, wobei m = p (q + 1) und p eine natürliche Zahl und q eine natürliche Zahl einschließlich der 0 ist.

7. Perforationsmittel zum Perforieren von stabförmigen Artikeln (6) der tabakverarbeitenden Industrie,
gekennzeichnet durch n Laserstrahlen (100a, 100b) zum gleichzeitigen Perforieren von n Artikeln (6), wobei n ≥ 2 und eine natürliche Zahl ist,
und durch n-x Umlenkspiegel (48), wobei x < n und eine natürliche Zahl ist,
wobei die n Laserstrahlen (100a, 100b) auf den n-x Umlenkspiegeln (48) jeweils paarweise einen Winkel (α) zwischen sich einschließen, der dem Abstand zweier Artikel (6) angepaßt ist.

8. Perforationsmittel nach Anspruch 7,
wobei bei sich bewegenden Artikeln (6) die n-x Umlenkspiegel als Schwenkspiegel (48) zum Nachführen der Laserstrahlen (100a, 100b) ausgebildet sind.

9. Perforationsmittel nach einem der Ansprüche 7 bis 8,
wobei m im wesentlichen parallele Laserstrahlen (44a-1, 44b-1, 44a-2, 44b-2; 46a-1, 46b-1, 46a-2, 46b-2) zum Perforieren jedes der n Artikel (6) an gleichzeitig m Stellen (114) vorgesehen sind.

10. Perforationsmittel nach Anspruch 9,
wobei die n-x Schwenkspiegel (48) um eine gemeinsame Schwenkachse (51) schwenkbar angeordnet sind.

11. Perforationsmittel nach einem der Ansprüche 7 bis 10,
wobei q = (m / p) - 1 halbdurchlässige Spiegel (47) und ein vollreflektierender Spiegel (50) vorgesehen sind, um vor dem Auftreffen der Laserstrahlen (44a, 44b; 46a, 46b) auf die Umlenkspiegel (48) aus p im wesentlichen parallelen Laserstrahlen (44a, 44b; 46a, 46b) m im wesentlichen parallele Laserstrahlen (44a-1, 44b-1, 44a-2, 44b-2; 46a-1, 46b-1, 46a-2, 46a-2) zu erzeugen, wobei p eine natürliche Zahl und q eine natürliche Zahl einschließlich 0 ist.

12. Vorrichtung zum Herstellen von stabförmigen Artikeln (6) der tabakverarbeitenden Industrie,
mit einem Rollkanal (90) zum Umwickeln der Artikel (6) mit Blättchen,
dadurch gekennzeichnet, daß mindestens ein Abschnitt des Rollkanals (90) als Perforationszone (94) ausgebildet ist, in der ein Perforationsmittel nach einem der Ansprüche 7 bis 11 auf die Artikel (6) einwirkt.

13. Vorrichtung nach Anspruch 12,
bei der der Rollkanal (90) eine Umwicklungszone (92) aufweist, in der die Artikel (6) mit den Blättchen umwickelt werden, wobei die Umwicklungszone (92) und die Perforationszone (94) unmittelbar aufeinander folgen oder sich in angrenzenden Randabschnitten teilweise überschneiden.

14. Vorrichtung nach Anspruch 13,
wobei der Rollkanal (90) aus einer eine Umfangsoberfläche (84) aufweisenden Rolltrommel (80) und einem der Umfangsoberfläche (84) gegenüberliegenden, eine Gegenrollfläche (86) aufweisenden Rollklotz (88) gebildet ist.
